# FASCICULE DE BREVET EUROPEEN

(11) **EP 3 194 644 B1**
(45) Date de publication et mention de la délivrance du brevet: **04.07.2018**
(21) Numéro de dépôt: 15771198.7
(22) Date de dépôt: 10.09.2015
(51) Int. Cl.: D04H 1/4209, D04H 1/46, D04H 3/07, C03C 14/00, C04B 30/02, C04B 41/00

(54) **PROCÉDÉ DE FABRICATION D'UNE STRUCTURE FIBREUSE**
VERFAHREN ZUR HERSTELLUNG EINER FASERSTRUKTUR
METHOD FOR MANUFACTURING A FIBROUS STRUCTURE

(30) Priorité: 12.09.2014 FR 1458581
(43) Date de publication de la demande: 26.07.2017
(73) Titulaire: Safran Ceramics, 33185 Le Haillan (FR)
(72) Inventeur: LOISON, Sylvie, F-33160 Saint-medard (FR); EVRARD, Hervé, F-33185 Le Haillan (FR); MONTAUDON, Marc, F-33200 Bordeaux (FR)
(74) Mandataire: Laïk, Eric
(86) Numéro de dépôt international: PCT/FR2015/052410
(87) Numéro de publication internationale: WO 2016/038305

(56) Documents cités:
- WO-A1-96/37646
- WO-A1-2005/106222
- WO-A1-2010/062591
- FR-A1- 2 637 586
- FR-A1- 2 770 233
- FR-A1- 2 983 851

## Description

### Arrière-plan de l'invention

L'invention concerne des procédés de fabrication de structures fibreuses et de préformes fibreuses comportant une étape de traitement thermique d'au moins une fibre précurseur de fibre céramique.

FR 2 637 586 décrit la réalisation de textures tissées et aiguilletées à partir de fibres précurseurs organo-siliciées totalement réticulées. Dans ce document, des fibres précurseurs de fibres céramiques sont soumises à un traitement thermique modéré (i.e. à une température comprise entre 250°C et 550°C) afin de les réticuler complètement tout en les conservant à l'état organique. Il est enseigné de ne pas dépasser la température de 550°C durant le traitement thermique afin de ne pas dégrader l'allongement à la rupture des fibres. Une ou plusieurs opérations textiles sont alors effectuées sur ces fibres ainsi traitées. FR 2 637 586 enseigne que les fibres obtenues après le traitement thermique modéré présentent à la fois une résistance en traction et un allongement à la rupture suffisants pour subir des opérations textiles sans être endommagées. Une fois la texture réalisée, les fibres précurseurs sont pyrolysées afin d'obtenir une texture SiC.

Toutefois, les essais menés par les inventeurs pour aiguilleter des fibres précurseurs traitées selon FR 2 637 586 n'ont pas donné des résultats complètement satisfaisants. Sans vouloir être liés à une quelconque théorie, les inventeurs considèrent que la résistance en traction et l'allongement à la rupture ne sont pas les seuls paramètres pertinents permettant de conférer à une fibre un caractère aiguilletable. Les inventeurs ont, en effet, constaté que les fibres traitées selon FR 2 637 586 ne présentent pas une résistance à la compression satisfaisante, ces fibres se cassant au contact de l'aiguille.

Il existe donc un besoin pour obtenir de nouveaux procédés de fabrication de structures fibreuses dans lesquels les fibres sont traitées afin de convenablement résister à la mise en oeuvre d'une ou plusieurs opérations textiles et notamment à la mise en oeuvre d'opérations d'aiguilletage, couture et/ou tissage.

### Objet et résumé de l'invention

A cet effet, l'invention propose, selon un premier aspect, un procédé de fabrication d'une structure fibreuse, comportant les étapes suivantes :
a) formation d'au moins une fibre céramique essentiellement amorphe par traitement thermique d'au moins une fibre précurseur de fibre céramique à une température comprise entre 900°C et 1200°C, et
b) réalisation d'une ou plusieurs opérations textiles mettant en oeuvre au moins une fibre céramique essentiellement amorphe formée lors de l'étape a) pour former une structure fibreuse comportant ladite au moins une fibre céramique essentiellement amorphe.

Par « fibre céramique essentiellement amorphe », il faut comprendre qu'au moins 90%, par exemple au moins 95%, par exemple la totalité, de la masse de ladite fibre céramique est à l'état amorphe. En particulier, il est possible de ne pas être en mesure de détecter par diffraction aux rayons X une structure cristalline dans une fibre céramique essentiellement amorphe.

Du fait de la réalisation de l'étape a), l'invention permet avantageusement de conférer aux fibres traitées des propriétés mécaniques satisfaisantes leur permettant de ne pas être endommagées lors de la réalisation d'opérations textiles comme des opérations de tissage, couture ou aiguilletage. Le traitement thermique de l'étape a) est effectué dans une plage de températures suffisamment faibles pour éviter de cristalliser significativement la fibre céramique et conserver une structure essentiellement amorphe. Les inventeurs ont constaté qu'une fibre céramique présentant un état de la matière tel qu'obtenu après l'étape a) a une résistance améliorée lors de la mise en oeuvre d'opérations textiles.

L'étape a) permet, en effet, d'obtenir des fibres ayant une rigidité suffisante pour notamment présenter une bonne résistance à la compression tout en étant suffisamment souples pour pouvoir être déformées convenablement durant la ou les opération(s) textile(s) réalisée(s).

Dans un exemple de réalisation, la ou les fibres précurseurs de fibres céramiques peuvent être soumises durant tout ou partie de l'étape a) à une température comprise entre 900°C et 1000°C. En variante, la ou les fibres précurseurs de fibres céramiques peuvent être soumises durant tout ou partie de l'étape a) à une température comprise entre 1000°C et 1100°C. En variante encore, la ou les fibres précurseurs de fibres céramiques peuvent être soumises durant tout ou partie de l'étape a) à une température comprise entre 1100°C et 1200°C.

Dans un exemple de réalisation, une pluralité de fibres précurseurs de fibres céramiques peuvent être traitées durant l'étape a).

Dans un exemple de réalisation, une ou plusieurs fibres de SiC essentiellement amorphes peuvent être formées lors de l'étape a).

La ou les fibre(s) essentiellement amorphe(s) formées lors de l'étape a) peut(peuvent) présenter un module d'Young inférieur ou égal à 200 GPa.

L'étape b) peut comporter la réalisation d'au moins une opération textile choisie parmi les opérations suivantes : craquage d'au moins une fibre, cardage de fibres, nappage de textures fibreuses, liaison de textures fibreuses par aiguilletage, liaison de textures fibreuses par couture, tissage de fibres, tricotage de fibres, tressage de fibres.

Le tissage de fibres peut être un tissage bi ou tridimensionnel.

Dans un exemple de réalisation, une liaison par aiguilletage d'une pluralité de textures fibreuses superposées peut être effectuée durant l'étape b), au moins une des textures fibreuses comportant des fibres céramiques essentiellement amorphes formées lors de l'étape a).

La réalisation d'une structure fibreuse aiguilletée permet avantageusement d'obtenir un réseau régulier de porosité facilitant l'introduction de divers types de matrices, en particulier lorsque la matrice est formée par procédé d'infiltration à l'état fondu, en lieu et place de tissus multicouches.

Les textures fibreuses liées par aiguilletage peuvent être des textures 2D.

En particulier, au moins une des textures fibreuses aiguilletées peut comporter un mélange de fibres céramiques essentiellement amorphes formées lors de l'étape a) et de fibres différentes desdites fibres céramiques essentiellement amorphes. Les fibres différentes desdites fibres céramiques essentiellement amorphes peuvent être des fibres de carbone et/ou des fibres céramiques.

En variante, au moins une des textures fibreuses aiguilletées comporte uniquement des fibres céramiques essentiellement amorphes formées lors de l'étape a).

Dans un exemple de réalisation, une première texture fibreuse comportant des fibres céramiques essentiellement amorphes formées lors de l'étape a) peut être liée par aiguilletage à une deuxième texture fibreuse comportant des fibres céramiques cristallines et/ou des fibres de carbone.

Ainsi, dans le cadre de l'invention, on peut réaliser l'aiguilletage d'une structure multicouches constituée pour partie de fibres céramiques cristallines et pour partie de fibres céramiques essentiellement amorphes. Les fibres céramiques cristallines sont très rigides donc non transférables et les fibres céramiques essentiellement amorphes sont, quant à elles, transférables. Une fois le transfert réalisé, les fibres céramiques essentiellement amorphes vont être structurées afin de former *in situ* des fibres céramiques cristallines. Toutefois, les contraintes à la rupture de ces fibres céramiques cristallines formées *in situ* peuvent être inférieures aux contraintes à la rupture des fibres qui étaient déjà sous forme cristalline lors de l'aiguilletage.

Ainsi, le fait de réaliser l'aiguilletage d'une structure multicouches comportant à la fois des fibres céramiques cristallines et des fibres céramiques essentiellement amorphes est avantageux car cela permet d'obtenir une structure fibreuse aiguilletée présentant une contrainte à la rupture plus élevée que celle d'une structure fibreuse obtenue par aiguilletage de fibres céramiques uniquement sous forme amorphe.

En variante, les textures fibreuses liées par aiguilletage peuvent chacune comporter des fibres céramiques essentiellement amorphes formées lors de l'étape a).

Dans un exemple de réalisation, l'étape b) peut comporter le tissage d'une pluralité de fibres céramiques essentiellement amorphes formées lors de l'étape a).

Les fibres céramiques essentiellement amorphes formées lors de l'étape a) présentent une meilleure souplesse et, par conséquent, une meilleure tissabilité que les fibres céramiques cristallines. Le tissage de fibres céramiques essentiellement amorphes permettra donc de réaliser une plus large variété de structures fibreuses que le tissage de fibres céramiques cristallines.

Dans un exemple de réalisation, l'étape b) peut comporter la formation d'au moins une fibre craquée par craquage d'au moins une fibre céramique essentiellement amorphe formée lors de l'étape a).

Dans un exemple de réalisation, l'étape b) peut comporter la couture d'une pluralité de textures fibreuses à l'aide d'au moins un fil de couture formé par ladite au moins une fibre craquée.

Dans un exemple de réalisation, l'étape b) peut comporter la formation d'une pluralité de fibres craquées par craquage d'une pluralité de fibres céramiques essentiellement amorphes formées lors de l'étape a) et ces fibres craquées peuvent être tissées durant l'étape b).

Les fils obtenus par craquage peuvent donner des fils fins et peuvent ainsi avantageusement permettre de réaliser par tissage des parties fines de pièces en matériau composite, par exemple un bord d'attaque d'aube.

La présente invention vise également un procédé de fabrication d'une préforme fibreuse comportant l'étape suivante :
c) formation d'une préforme fibreuse par soumission de la structure fibreuse obtenue par mise en oeuvre d'un procédé tel que défini plus haut à un traitement thermique de structuration de la ou des fibres céramiques essentiellement amorphes présentes dans la structure fibreuse afin de transformer la ou les fibres céramiques essentiellement amorphes en fibres céramiques cristallines.

Une température supérieure à 1200°C peut être imposée durant le traitement thermique de structuration.

La présente invention vise également un procédé de fabrication d'une pièce en matériau composite à matrice céramique comportant une étape de formation d'une matrice céramique dans la porosité de la préforme fibreuse obtenue par mise en oeuvre d'un procédé tel que décrit plus haut.

Dans un exemple de réalisation, la matrice peut être formée par un procédé d'infiltration à l'état fondu.

En particulier, dans les pièces en matériau composite selon l'invention, la fraction volumique V_{f} correspondant au volume occupé par les fibres pourra être relativement élevée, par exemple être supérieure ou égale à 30%, voire à 35%, voire à 50%.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 représente un schéma-blocs d'un exemple de réalisation d'un procédé selon l'invention,
- les figures 2A, 2B, 3A et 3B sont des photographies montrant les résultats d'essais d'aiguilletage obtenus avec des fibres traitées conformément à l'étape a), et
- les figures 4A et 4B sont des photographies montrant un résultat d'essai d'aiguilletage obtenu avec des fibres ayant été soumises à un traitement thermique différent de celui selon l'étape a).

### Description détaillée de modes de réalisation

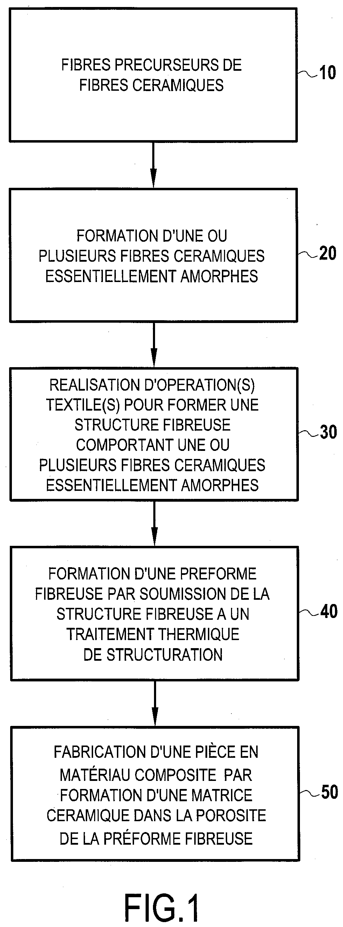

On a représenté à la figure 1 une succession d'étapes d'un procédé selon l'invention. On part tout d'abord de fibres précurseurs de fibres céramiques (étape 10), par exemple de fibres précurseurs de fibres de SiC. On peut, par exemple, utiliser des précurseurs de fibres de type « Tyranno » de la société UBE ou de type « Nicalon » de la société NGS. Ces précurseurs sont ensuite filés par des méthodes bien connues de l'homme du métier.

A l'étape 20, on forme une ou plusieurs fibres céramiques essentiellement amorphes par traitement thermique selon l'étape a). Durant l'étape a), une température comprise entre 900°C et 1200°C peut être imposée pendant une durée supérieure ou égale à 1 minute, par exemple supérieure ou égale à 10 minutes, par exemple comprise entre 10 minutes et 30 minutes. La température imposée durant l'étape 20 peut ne pas dépasser 1200°C.

On réalise ensuite, à l'étape 30, une ou plusieurs opérations textiles pour former une structure fibreuse.

On peut, par exemple, d'abord réaliser le tissage d'une pluralité de fibres céramiques essentiellement amorphes formées lors de l'étape a) afin d'obtenir une première texture fibreuse et ensuite procéder à l'aiguilletage de cette première texture fibreuse avec une deuxième texture fibreuse afin de former tout ou partie de la structure fibreuse. Dans ce cas, la deuxième texture fibreuse peut ou non comporter des fibres céramiques essentiellement amorphes formées lors de l'étape a).

En variante, on peut d'abord réaliser le tissage d'une pluralité de fibres céramiques essentiellement amorphes formées lors de l'étape a) afin d'obtenir une première texture fibreuse et ensuite procéder à la couture de cette première texture fibreuse avec une deuxième texture fibreuse afin de former tout ou partie de la structure fibreuse. Dans ce cas, la deuxième texture fibreuse peut ou non comporter des fibres céramiques essentiellement amorphes formées lors de l'étape a).

En variante encore, la structure fibreuse est, durant l'étape 30, directement obtenue par tissage de fibres, les fibres tissées comportant une pluralité de fibres céramiques essentiellement amorphes formées lors de l'étape a). Dans ce cas, il est possible que la structure fibreuse comporte uniquement des fibres céramiques essentiellement amorphes formées lors de l'étape a). En variante, la structure fibreuse peut comporter un mélange de fibres céramiques essentiellement amorphes formées lors de l'étape a) et de fibres de carbone et/ou de fibres céramiques différentes desdites fibres céramiques essentiellement amorphes.

Il est aussi possible de procéder lors de l'étape 30 au craquage d'une ou plusieurs fibres céramiques essentiellement amorphes formées lors de l'étape a) afin de former une ou plusieurs fibres craquées. Ces fibres craquées peuvent alors être utilisées comme fil de couture pour coudre ensemble une pluralité de textures fibreuses afin de former tout ou partie de la structure fibreuse. Au moins une des textures fibreuses cousues peut comporter des fibres céramiques essentiellement amorphes formées lors de l'étape a). Les fibres craquées peuvent encore être tissées pour former tout ou partie de la structure fibreuse.

D'autres variantes sont possibles comme par exemple le tricotage ou le tressage d'une pluralité de fibres essentiellement amorphes formées lors de l'étape a) afin de former tout ou partie de la structure fibreuse.

Une fois la structure fibreuse obtenue, on la soumet à un traitement thermique de structuration. Les fibres céramiques essentiellement amorphes formées lors de l'étape a) qui étaient présentes dans la structure fibreuse sont alors transformées en fibres céramiques cristallines.

### Exemple

Des essais visant à évaluer le caractère aiguilletable de fibres obtenues après mise en oeuvre de différents traitements thermiques ont été réalisés.

Le caractère aiguilletable de trois types de fibres a été évalué :
Essai 1 : fibres obtenues après traitement thermique de fibres précurseurs de type « Nicalon » de la société NGS à 1000°C,
Essai 2 : fibres obtenues après traitement thermique de fibres précurseurs de type « Tyranno » de la société UBE à 900°C,
Essai 3 : fibres obtenues après traitement thermique de fibres précurseurs de type « Tyranno » de la société UBE à 850°C.

Les fibres ont été superposées à plat (sans torsion) sur un feutre polypropylene d'épaisseur 11 mm et ont été mises en tension. Un essai d'aiguilletage de ces fibres a ensuite été réalisé afin d'évaluer si ces fibres transfèrent ou non suite au contact avec l'aiguille. L'aiguille qui a été utilisée pour l'aiguilletage est une aiguille à fourche.

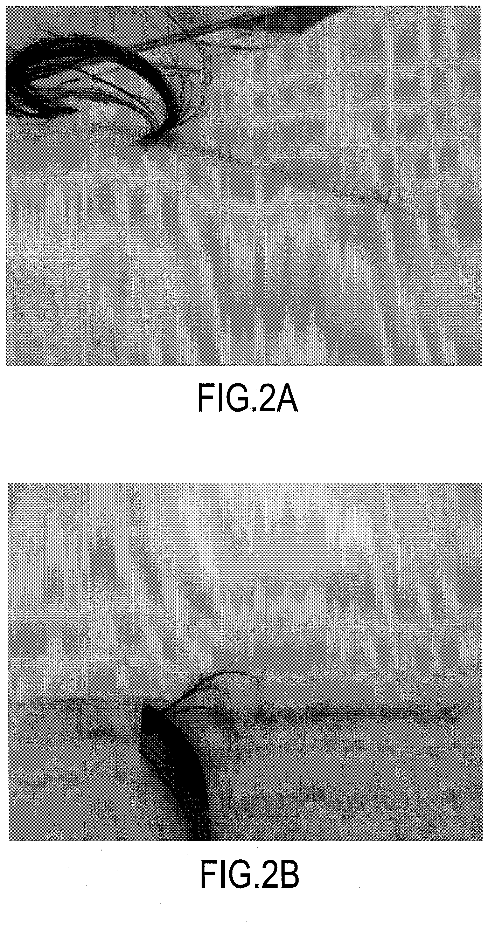

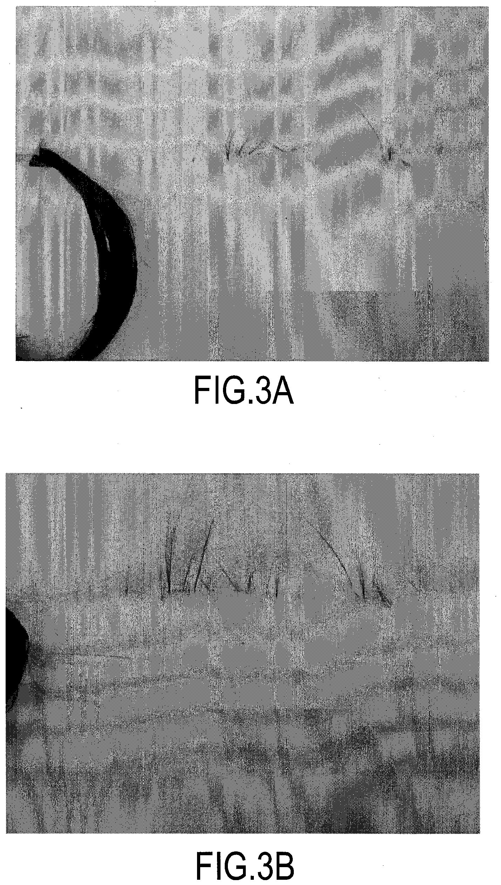

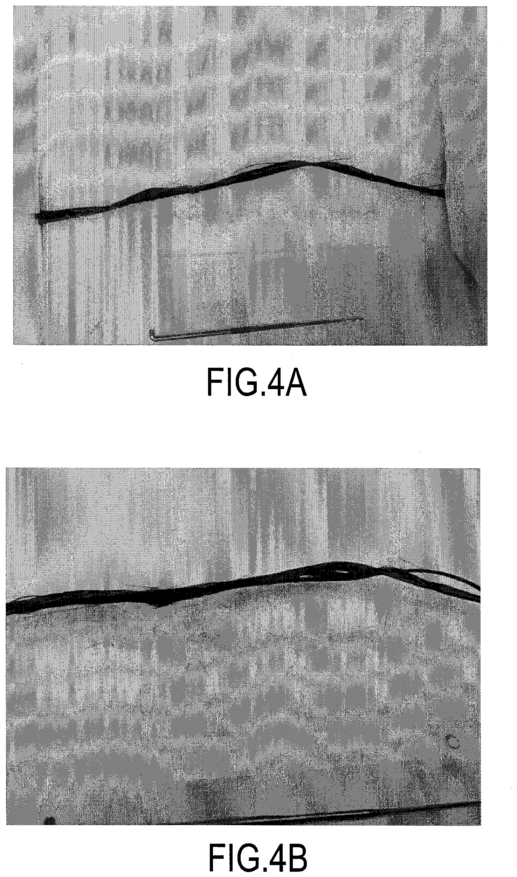

Les photographies montrant les résultats de l'essai 1 sont fournies aux figures 2A et 2B, celles montrant les résultats de l'essai 2 sont fournies aux figures 3A et 3B et celles montrant les résultats de l'essai 3 sont fournies aux figures 4A et 4B.

On constate que les fibres transfèrent correctement après aiguilletage pour les traitements thermiques des essais 1 et 2 (voir figures 2A, 2B, 3A et 3B).

Suite au traitement thermique de l'essai 3, les fibres ne sont pas en mesure d'être correctement aiguilletées. Lors de l'essai 3, les fibres ont été endommagées suite au contact avec l'aiguille et n'ont pas transféré (voir figures 4A et 4B).

D'autres essais ont été conduits de la même manière en utilisant le même type d'aiguille. Les résultats sont donnés dans le tableau 1 ci-dessous. Dans le tableau 1 ci-dessous, « OK » signifie que la fibre testée est aiguilletable et « NOK » signifie que la fibre testée n'est pas aiguilletable.

**Tableau 1**

| | **Température de traitement thermique** | | | | | |
|---|---|---|---|---|---|---|
| | **850°C** | **900°C** | **950°C** | **1000°C** | **1050°C** | **1100°C** |
| Tyranno S ensimée | NOK | OK | OK | OK | | |
| *diamètre (µm)* | 16,5 | 15 | 14,4 | 14,5 | | |
| *contrainte à rupture (MPa)* | 490 | 1340 | 1550 | 1645 | | |
| *module d'Young (GPa)* | 38 | 94 | 107 | 113 | | |
| | | | | | | |
| Tyranno S ensimée | | OK | OK | OK | NOK | |
| *diamètre (µm)* | | 14,9 | 14,4 | 14,4 | 14,2 | |
| *contrainte à rupture (MPa)* | | 1040 | 1775 | 1600 | 1870 | |
| *module d'Young (GPa)* | | 58 | 114 | 131 | 106 | |
| | | | | | | |
| Nicalon non ensimée | | | | OK | NOK | NOK |
| *diamètre (µm)* | | | | 15,7 | 15,3 | 14,8 |
| *contrainte à rupture (MPa)* | | | | 2995 | 1085 | 1375 |
| *module d'Young (GPa)* | | | | 153 | 200 | 181 |

L'expression « comportant/contenant un(e) » doit se comprendre comme « comportant/contenant au moins un(e) ».

L'expression « compris(e) entre ... et ... » ou « allant de ... à ... » doit se comprendre comme incluant les bornes.

## Revendications

1. Procédé de fabrication d'une structure fibreuse, comportant les étapes suivantes :
a) formation d'au moins une fibre céramique essentiellement amorphe par traitement thermique d'au moins une fibre précurseur de fibre céramique à une température comprise entre 900°C et 1200°C, et
b) réalisation d'une ou plusieurs opérations textiles mettant en oeuvre au moins une fibre céramique essentiellement amorphe formée lors de l'étape a) pour former une structure fibreuse comportant ladite au moins une fibre céramique essentiellement amorphe.

2. Procédé selon la revendication 1, **caractérisé en ce que** une liaison par aiguilletage d'une pluralité de textures fibreuses superposées est effectuée durant l'étape b), au moins une des textures fibreuses comportant des fibres céramiques essentiellement amorphes formées lors de l'étape a).

3. Procédé selon la revendication 2, **caractérisé en ce que** une première texture fibreuse comportant des fibres céramiques essentiellement amorphes formées lors de l'étape a) est liée par aiguilletage à une deuxième texture fibreuse comportant des fibres céramiques cristallines et/ou des fibres de carbone.

4. Procédé selon l'une quelconque des revendications 2 et 3, **caractérisé en ce que** les textures fibreuses liées par aiguilletage comportent chacune des fibres céramiques essentiellement amorphes formées lors de l'étape a).

5. Procédé selon l'une quelconque des revendications 1 à 4, **caractérisé en ce que** l'étape b) comporte le tissage d'une pluralité de fibres céramiques essentiellement amorphes formées lors de l'étape a).

6. Procédé selon l'une quelconque des revendications 1 à 5, **caractérisé en ce que** l'étape b) comporte la formation d'au moins une fibre craquée par craquage d'au moins une fibre céramique essentiellement amorphe formée lors de l'étape a).

7. Procédé selon la revendication 6, **caractérisé en ce que** l'étape b) comporte la couture d'une pluralité de textures fibreuses à l'aide d'au moins un fil de couture formé par ladite au moins une fibre craquée.

8. Procédé selon l'une quelconque des revendications 6 et 7, **caractérisé en ce que** l'étape b) comporte la formation d'une pluralité de fibres craquées par craquage d'une pluralité de fibres céramiques essentiellement amorphes formées lors de l'étape a) et **en ce que** ces fibres craquées sont tissées durant l'étape b).

9. Procédé selon l'une quelconque des revendications 1 à 8, **caractérisé en ce que** une pluralité de fibres précurseurs de fibres céramiques sont traitées durant l'étape a).

10. Procédé selon l'une quelconque des revendications 1 à 9, **caractérisé en ce que** une ou plusieurs fibres de SiC essentiellement amorphes sont formées lors de l'étape a).

11. Procédé de fabrication d'une préforme fibreuse comportant l'étape suivante :
c) formation d'une préforme fibreuse par soumission de la structure fibreuse obtenue par mise en oeuvre d'un procédé selon l'une quelconque des revendications 1 à 10 à un traitement thermique de structuration de la ou des fibres céramiques essentiellement amorphes présentes dans la structure fibreuse afin de transformer la ou les fibres céramiques essentiellement amorphes en fibres céramiques cristallines.

12. Procédé de fabrication d'une pièce en matériau composite à matrice céramique comportant une étape de formation d'une matrice céramique dans la porosité de la préforme fibreuse obtenue par mise en oeuvre du procédé selon la revendication 11.

## Patentansprüche

1. Verfahren zur Herstellung einer Faserstruktur, das die folgenden Schritte umfasst:
a) Ausbilden wenigstens einer im Wesentlichen amorphen Keramikfaser durch Wärmebehandlung wenigstens einer Keramikfaser-Vorläuferfaser bei einer Temperatur im Bereich zwischen 900 °C und 1200 °C, und
b) Durchführen von einem oder mehreren Textilarbeitsschritten unter Verwendung von wenigstens einer im Wesentlichen amorphen Keramikfaser, die während des Schrittes a) gebildet wird, um eine Faserstruktur zu bilden, die die wenigstens eine im Wesentlichen amorphe Keramikfaser umfasst.

2. Verfahren nach Anspruch 1, **dadurch gekennzeichnet, dass** während des Schrittes b) ein Verbinden einer Vielzahl von übereinander angeordneten Fasertexturen durch Vernadeln durchgeführt wird, wobei wenigstens eine der Fasertexturen im Wesentlichen amorphe Keramikfasern, welche während des Schrittes a) gebildet werden, umfasst.

3. Verfahren nach Anspruch 2, **dadurch gekennzeichnet, dass** eine erste Fasertextur, die im Wesentlichen amorphe Keramikfasern, welche während des Schrittes a) gebildet werden, umfasst, durch Vernadeln mit einer zweiten Fasertextur, die kristalline Keramikfasern und/oder Kohlenstofffasern umfasst, verbunden wird.

4. Verfahren nach einem der Ansprüche 2 und 3, **dadurch gekennzeichnet, dass** die durch Vernadeln verbundenen Fasertexturen jeweils im Wesentlichen amorphe Keramikfasern, die während des Schrittes a) gebildet werden, umfassen.

5. Verfahren nach einem der Ansprüche 1 bis 4, **dadurch gekennzeichnet, dass** Schritt b) das Weben einer Vielzahl von im Wesentlichen amorphen Keramikfasern, die während des Schrittes a) gebildet werden, umfasst.

6. Verfahren nach einem der Ansprüche 1 bis 5, **dadurch gekennzeichnet, dass** Schritt b) das Ausbilden wenigstens einer gecrackten Faser durch Cracken wenigstens einer während des Schrittes a) gebildeten, im Wesentlichen amorphen Keramikfaser umfasst.

7. Verfahren nach Anspruch 6, **dadurch gekennzeichnet, dass** Schritt b) das Nähen einer Vielzahl von Fasertexturen mit Hilfe wenigstens eines Nähfadens, welcher durch die wenigstens eine gecrackte Faser gebildet ist, umfasst.

8. Verfahren nach einem der Ansprüche 6 und 7, **dadurch gekennzeichnet, dass** Schritt b) das Ausbilden einer Vielzahl von gecrackten Fasern durch Cracken einer Vielzahl von im Wesentlichen amorphen Keramikfasern, welche während des Schrittes a) gebildet werden, umfasst, und dass diese gecrackten Fasern während des Schrittes b) gewebt werden.

9. Verfahren nach einem der Ansprüche 1 bis 8, **dadurch gekennzeichnet, dass** während des Schrittes a) eine Vielzahl von Keramikfaser-Vorläuferfasern behandelt wird.

10. Verfahren nach einem der Ansprüche 1 bis 9, **dadurch gekennzeichnet, dass** während des Schrittes a) eine oder mehrere im Wesentlichen amorphe SiC-Fasern gebildet werden.

11. Verfahren zur Herstellung eines Faservorformlings, das den folgenden Schritt umfasst:
c) Ausbilden eines Faservorformlings, indem die durch Durchführen eines Verfahrens nach einem der Ansprüche 1 bis 10 erhaltene Faserstruktur einer Wärmebehandlung zur Strukturierung der im Wesentlichen amorphen Keramikfaser oder -fasern, welche in der Faserstruktur vorhanden sind, unterzogen wird, um die im Wesentlichen amorphe(n) Keramikfaser oder -fasern in kristalline Keramikfasern umzuwandeln.

12. Verfahren zur Herstellung eines Teils aus Keramikmatrix-Verbundwerkstoff, umfassend einen Schritt des Ausbildens einer Keramikmatrix in der Porosität des Faservorformlings, welcher durch Durchführen des Verfahrens nach Anspruch 11 erhalten wird.

## Claims

1. A method of fabricating a fiber structure, the method comprising the following steps:
a) forming at least one essentially amorphous ceramic fiber by applying heat treatment at a temperature lying in the range 900°C to 1200°C to at least one fiber that is a precursor of ceramic fiber; and
b) performing one or more textile operations using at least one essentially amorphous ceramic fiber formed by performing step a) in order to form a fiber structure including said at least one essentially amorphous ceramic fiber.

2. A method according to claim 1, **characterized in that** during step b) a plurality of superposed fiber fabrics are bonded together by needling, at least one of the fiber fabrics including essentially amorphous ceramic fibers formed by performing step a).

3. A method according to claim 2, **characterized in that** a first fiber fabric including essentially amorphous ceramic fibers formed by performing step a) is bonded by needling to a second fiber fabric including crystalline ceramic fibers and/or carbon fibers.

4. A method according to any one of claims 2 and 3, **characterized in that** each of the fiber fabrics bonded by needling includes essentially amorphous ceramic fibers formed by performing step a).

5. A method according to any one of claims 1 to 4, **characterized in that** step b) includes weaving a plurality of essentially amorphous ceramic fibers formed by performing step a).

6. A method according to any one of claims 1 to 5, **characterized in that** step b) includes forming at least one stretch-broken fiber by stretching at least one essentially amorphous ceramic fiber formed by performing step a).

7. A method according to claim 6, **characterized in that** step b) includes stitching together a plurality of fiber fabrics using at least one stitching yarn formed by said at least one stretch-broken fiber.

8. A method according to any one of claims 6 and 7, **characterized in that** step b) includes forming a plurality of stretch-broken fibers by stretching a plurality of essentially amorphous ceramic fibers formed by performing step a) and **in that** the stretch-broken fibers are woven during step b).

9. A method according to any one of claims 1 to 8, **characterized in that** a plurality of fibers that are precursors of ceramic fibers are treated during step a).

10. A method according to any one of claims 1 to 9, **characterized in that** one or more essentially amorphous SiC fibers are formed during step a).

11. A method of fabricating a fiber preform, including the following step:
c) forming a fiber preform by subjecting the fiber structure obtained by performing a method according to any one of claims 1 to 10 to heat treatment for structuring the essentially amorphous ceramic fiber(s) present in the fiber structure in order to transform the essentially amorphous ceramic fiber(s) into crystalline ceramic fiber(s).

12. A method of fabricating a ceramic matrix composite material part, the method including a step of forming a ceramic matrix in the pores of the fiber preform obtained by performing the method of claim 11.
